# EUROPEAN PATENT SPECIFICATION

(11) **EP 2 612 726 B1**
(45) Date of publication and mention of the grant of the patent: **01.10.2014**
(21) Application number: 11818923.2
(22) Date of filing: 31.10.2011
(51) Int. Cl.: B23Q 3/06, B27C 9/00

(54) **DEVICE FOR FIXING PLATES FOR NUMERICAL CONTROL APPLICATIONS**
PLATTENSPANNVORRICHTUNG FÜR NUMERISCH GESTEUERTE ANWENDUNGEN
DISPOSITIF POUR FIXATION DE PLANCHES POUR APPLICATIONS DE COMMANDE NUMÉRIQUE

(43) Date of publication of application: 10.07.2013
(73) Proprietor: Lm Machines S.L., 31587 Mendavia (Navarra) (ES)
(72) Inventor: MATEO ROMANO, Lorenzo, E-31587 Mendavia (Navarra) (ES)
(74) Representative: Pons Ariño, Angel
(86) International application number: PCT/IB2011/002569
(87) International publication number: WO 2012/038830

(56) References cited:
- EP-B1- 0 567 531
- DE-A1- 10 317 486
- US-A- 3 779 366

## Description

### OBJECT OF THE INVENTION

The patent refers to a device for fixing plates on a table, especially for pantograph-like equipment containing two axes, X and Y.

### BACKGROUND OF THE INVENTION

Currently, there are cutting equipments where it is necessary to cut or mill plates of different materials, the cutting method can be laser, water jet, milling, etc. and its application may be for signs, labelling, facades, etc. During the mechanical process, it is essential for the material not to move and during etching works (those not involving cutting) it is indispensable that the distance between the tool and the plate remains constant. A device for fixing plates according to the preamble of appended claim 1 is known from US-3,779,366.

Currently, there are other different fixing devices, for example, screwing the plate to the table, vacuum tables, and fixed vertical weights. The screwing does not attain a homogeneous attachment and damages the table when the screws begin to coincide in the same position, while also being a manual process only adequate for small productions. Vacuum tables also fail to completely solve the problem since the piece to be placed may have very different shapes and sizes, which causes vacuum losses and demands complex methods that are not well resolved to adjust the vacuum areas and, in addition, the necessary equipment is very expensive and large, requiring high maintenance. The fixed vertical weights limit tool movement and their placement is not previously known since the material to be worked with can have any size, and even having a table with various points for tool placement it is hard and industrious to obtain a homogeneous fixing of the plate.

The problem to be solved is to have a fast-acting plate fixing device, valid for any plate format and size, applicable to different width and materials, achieving homogeneous fixing, with a low cost and no maintenance.

### DESCRIPTION OF THE INVENTION

The proposed device for fixing plates solves all aforementioned problems. To do so, one or several fixed weights applied to one of the plate's edges are provided, and by means of pressure they prevent the movement of the board.

Besides, there is one or several rollers, mounted on the axis moving over the board, said rollers pressing the board on its entire length.

These rollers are mounted over a pivoting element with a bracket configuration, so it is possible to avoid edges, grooves, obstacles, etc. with minimal drag effort, without overloading the operation of the axis on which they are mounted. This bracket features springs pressing the rollers against the board.

Similarly, the proposed device features a plate fixing device on its perimeter area formed by auxiliary rollers that activated through a lever, put pressure over the plate, immobilizing said plate. To operate said auxiliary rollers, a lever is activated, which pushes a guide featuring several support points defined by pivots which are linked to a lever articulated on its central area through a swivelling articulation and on whose upper edge the auxiliary roller is placed.

There can be as many auxiliary rollers as deemed necessary along the table.

### DESCRIPTION OF THE DRAWINGS

To complement the description being made and in order to help better understand the features of the invention, according to a preferred practical embodiment thereof, a set of drawings is attached as an integral part of said description, wherein the following is shown as way of illustration but not limited to:
Fig. 1.- Shows a perspective view of the fixing device object of the present invention.
Fig. 2.- Shows a detailed view of the attaching means.
Fig. 3.- Shows a detailed view of the rollers of the invention's device.

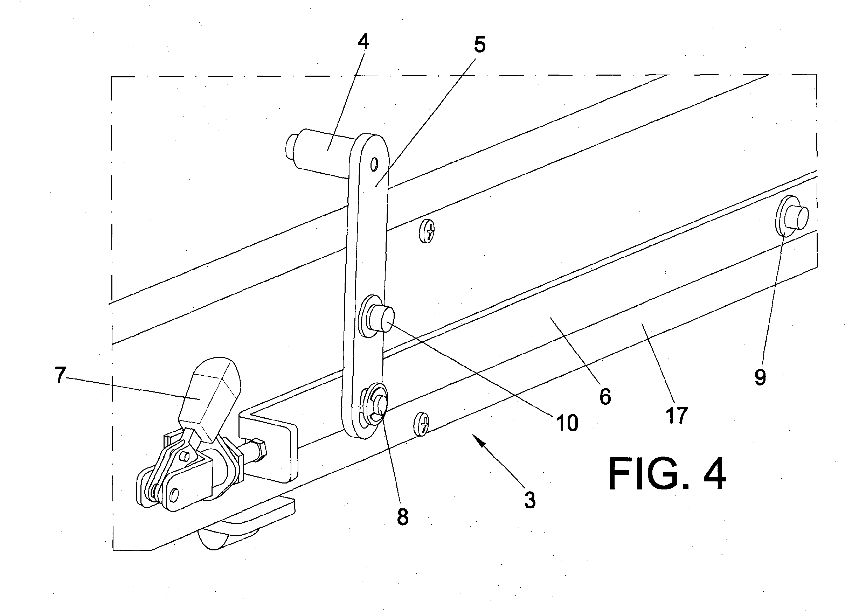

Fig. 4.- Shows a detailed view of the auxiliary attachment means, wherein the guide covering them has been removed for a better observation of said means.

### PREFERRED EMBODIMENT OF THE INVENTION

In view of the figures, an embodiment of the fixing device (1) object of the invention is described below.

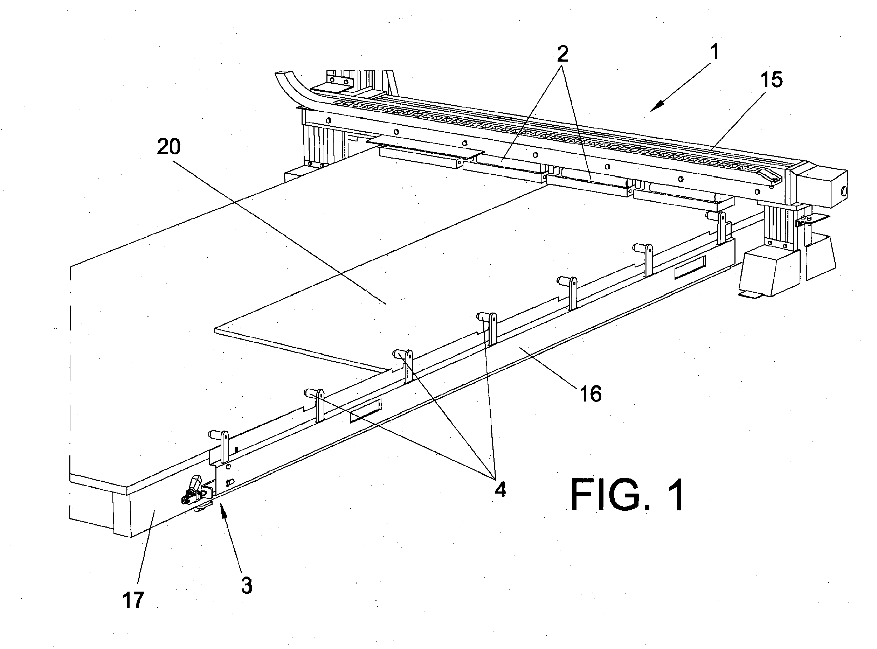

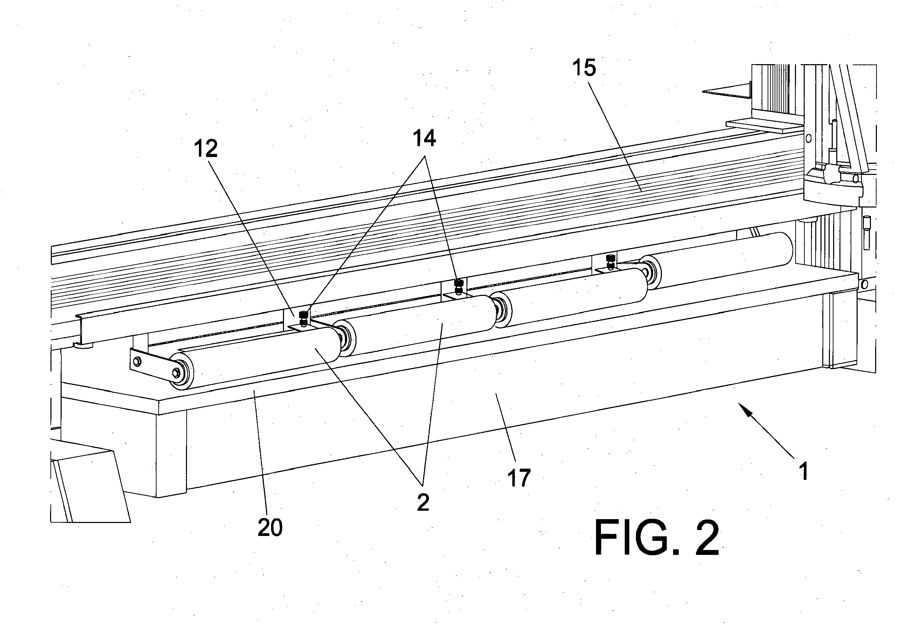

As it can be observed in figure 1, the fixing device (1) comprises:
- a table (17) over which the plate (20) to be mechanized is placed,
- attaching means (15) in bracket configuration, with a bridge shape and adapted to move over the table's upper surface (17), with the plate (20) remaining under said attaching means(15) as shown in figure 2, and
- rollers (2) located on the lower area of the attaching means (15), which are designed to put pressure on the plate (20) through the activation of springs (14).

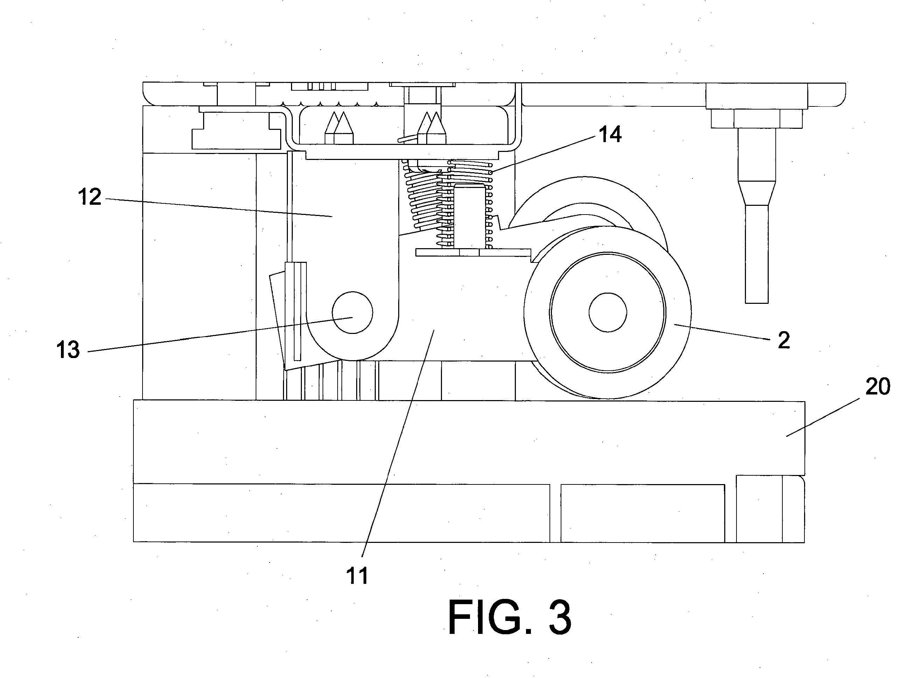

As it can be seen in figure 3, said springs (14) push an arm (11) which is articulated on an axis (13) over which said arm (11) pivots with respect to a support (12).

This way, the attaching means (15) move along the table (17) in a way that they put pressure and therefore fix the plate (20) to be mechanized.

For a better fixing of the plate (20), the device (1) features auxiliary attaching means (3) placed along one of the table's sides (17) which have a control rod (6) that travels said table side (17) and is attached to said side table (17) through anchors (9) inserted into holes performed on said control rod (6), holes that may be round or with a curved elongated hole shape allowing movement of the control rod (6) in a longitudinal direction. Said anchors (9) may have drag pivots (8) that prevent the ejection of a lever (5), which has vertical holes for the lever (5) to be pulled by the drag pivots (8), at which end a hole is found through which the pivot (9) is inserted, said lever (5) also has a pivoting articulation (10), which connects to a guide (16) over which the levers (5) pivot on its central part, said lever (5) also has an auxiliary roller (4) placed on its free end, so that when activating the control rod (6) pushing an activating lever (7) integrally connected to said control rod (6) through an articulated mechanism, the control rod (6) pushes the lever (5) that rotates over the pivoting articulation (10) displacing the auxiliary roller (4) making a circumference arc until coming into contact with the plate (20) putting pressure on it and this way, fixing it to the table (17). This is attained since the pivoting articulation (10) is fixed to the guide (16) so that the levers (5) pivot over the pivoting articulation (10).

It is worth noting that the guide (16) has areas that are higher than the support table (17) so that said areas serve as a lateral support for keeping aligned the plates (20) to be mechanized.

## Claims

1. Device (1) for fixing plates (20) for numerical control applications comprising:
a table (17) over which the plate (20) to be mechanized is placed,
attaching means designed to put pressure on the plate (20), wherein said attaching means comprises:
- a bracket configuration element (15),
- springs (14) fixed to said bracket configuration element and which push an arm (11) articulated on an axis (13) over which said arm (11) pivots with respect to a support (12),
- rollers (2) located on the lower part of the bracket configuration element (15) designed to put pressure on the plate (20) through the action of said springs (14).
**characterized in that** said attaching means are movable along the table (17) wherein the bracket configuration element (15) has a bridge-like shape adapted to move over the table (17).

2. Device (1) for fixing plates (20) for numerical control applications according to claim 1 **characterized in that** it also comprises auxiliary attaching means (3) which are located along at least one of the table's (17) lateral sides and which comprise:
- a control rod (6) which is located along said lateral side and attached to it through at least one anchor (9) that goes through some holes made on the guide (16) fixed to said lateral side,
- at least one lever (5) wherein in one of its ends an articulated control rod (6) is found, by means of at least one drag pivot (8) and which also features at least one pivoting articulation (10) in its central area and an auxiliary roller (4) located on its free end, and
- an activation lever (7) linked to the control rod (6) adapted to transfer movement to the lever (5) so that the auxiliary roller (4) presses the plate (20) against the table (17).

3. Device (1) for fixing plates (20) for numerical control applications according to claim 2 **characterized in that** the guide (16) features areas that are higher than the table (17) designed to serve as a lateral support to keep the plate (20) aligned.

## Patentansprüche

1. Vorrichtung (1) zur Befestigung von Platten (20) in CNC-Anwendungen umfassend:
einen Tisch (17), über dem die zu bearbeitende Platte (20) positioniert wird,
Befestigungsmittel zur Beaufschlagung von Druck auf die Platte (20), wobei die genannten Befestigungsmittel umfassen:
- ein als Halterung angeordnetes Element (15), ,
- Feder (14), die auf dem als Halterung angeordnetes Element befestigt sind und die auf einen Arm (11) drucken, der auf einer Achse (13) gelenkig gelagert ist, über welcher der genannte Arm (11) zu einer Stutze (12) schwenkt,
- Rollen (2), die auf der unteren Seite des als Halterung angeordneten Elements angeordnet sind, derartig ausgeführt, dass sie beim Betätigen der genannten Feder (14) Druck auf die Platte (20) ausüben;
**dadurch gekennzeichnet, dass** die genannten Befestigungsmitteln entlang des Tisches (17) beweglich sind, wobei das als Halterung angeordnetes Element (15) eine brückenformige Ausführung aufweist, die für die Bewegung über dem Tisch angepasst ist.

2. Vorrichtung (1) zur Befestigung von Platten (2) in CNC-Anwendungen nach Anspruch 1, **dadurch gekennzeichnet, dass** sie auch Hilfsbefestigungsmittel (3) aufweist, die sich entlang zumindest einer der seitlichen Bereiche des Tisches (17) befinden und die aufweisen:
- Eine Steuerungsstange (6), die sich entlang des genannten seitlichen Bereiches befindet und hieran zumindest durch einen Anker (9) befestigt ist, der durch die auf dem seitlichen Bereich der angebrachten Führung (16) angeordneten Bohrungen durchgeht,
- Zumindest einen Hebel (5), wobei sich an einem seiner Enden eine durch zumindest einen Schleppzapfen gelenkig gelagerte Steuerungsstange befindet und die auch zumindest ein schwenkbares Gelenk (10) in ihrem mittlerem Bereich und eine Hilfsrolle (4) auf dem freien Ende aufweist, und
- Einen Betätigungshebel (7), der mit der Steuerungsstange (6) verbunden ist, deartig ausgeführt, dass er Bewegung auf den Hebel (5) übertragen kann, so dass die Hilfsrolle (4) die Platte (20) gegen den Tisch (17) pressen kann.

3. Vorrichtung (1) zur Befestigung von Platten (20) in CNC-Anwendungen nach Anspruch 2, **dadurch gekennzeichnet, dass** die Führung (16) Bereiche aufweist, die höher als der Tisch (17) ausgeführt sind, damit sie als seitliche Stutze einwirken und die Platte (20) auf eine Linie bringen.

## Revendications

1. Dispositif (1) pour fixer des plaques (20) destinées à des fonctions de commande numérique comprenant : une table (17) au-dessus de laquelle la plaque (20) à usiner est placée, des moyens de fixation conçus pour faire pression sur la plaque (20), où lesdits moyens de fixation comprennent :
- un élément configuré en équerre (15),
- des ressorts (14) fixés audit élément configuré en équerre et qui poussent un bras (11) articulé sur un axe (13) au-dessus duquel ledit bras (11) pivote par rapport à un support (12),
- des galets (2) situés sur la partie inférieure de l'élément configuré en équerre (15) conçu pour faire pression sur la plaque (20) durant l'action desdits ressorts (14),
**caractérisé en ce que** lesdits moyens de fixation sont mobiles le long de la table (17) où l'élément configuré en équerre (15) est en forme de pont adaptée au déplacement au-dessus de la table (17).

2. Dispositif (1) pour fixer des plaques (20) destinées à des fonctions de commande numérique, selon la revendication 1, **caractérisé en ce qu'**il comprend aussi des moyens de fixation auxiliaires (3) qui sont situés le long d'au moins l'un des bords latéraux de la table (17) et qui comprennent :
- une barre de commande (6) qui est située le long dudit bord latéral et fixée à lui par au moins une pièce d'ancrage (9) qui passe à travers quelques trous réalisés sur le guide (16) fixé audit bord latéral,
- au moins un levier (5) où à l'une de ses extrémités se trouve une barre de commande (6) articulée, au moyen d'au moins un pivot d'entraînement (8) et qui présente aussi au moins une articulation pivotante (10) dans sa zone centrale et un galet auxiliaire (4) situé à son extrémité libre, et
- un levier d'activation (7) relié à la barre de commande (6) apte à transférer le mouvement au levier (5) de façon à ce que le galet auxiliaire (4) comprime la plaque (20) contre la table (17).

3. Dispositif (1) pour fixer des plaques (20) destinées à des fonctions de commande numérique, selon la revendication 2, **caractérisé en ce que** le guide (16) présente des zones qui sont plus hautes que la table (17) conçues pour servir de support latéral afin de maintenir la plaque (20) alignée.
